# EUROPÄISCHE PATENTSCHRIFT

(11) **EP 1 872 928 B1**
(45) Veröffentlichungstag und Bekanntmachung des Hinweises auf die Patenterteilung: **17.11.2010**
(21) Anmeldenummer: 07111065.4
(22) Anmeldetag: 26.06.2007
(51) Int. Cl.: B29C 67/00, B22F 3/10

(54) **Verfahren zum Aufbauen eines dreidimensionalen Körpers**
Method for building up three-dimensional parts
Procédé de production d'objets tridimensionnels

(30) Priorität: 30.06.2006 DE 102006030350
(43) Veröffentlichungstag der Anmeldung: 02.01.2008
(73) Patentinhaber: Voxeljet Technology GmbH, 86316 Friedberg (DE)
(72) Erfinder: Ederer, Ingo, 86911, Dießen (DE)
(74) Vertreter: Viering, Jentschura & Partner

(56) Entgegenhaltungen:
- WO-A-93/25336
- WO-A-2005/097476
- WO-A-2006/100556

## Beschreibung

Die Erfindung betrifft ein Verfahren zum Aufbauen eines Schichtenkörpers aus einer Mehrzahl von übereinander liegenden Schichten aus Partikelmaterial, die in örtlich vorbestimmten Bereichen, die nach Ort und Ausdehnung von Schicht zu Schicht voneinander abweichen können, verfestigt und miteinander verbunden sind, so dass von den verfestigten vorbestimmten Bereichen des Schichtenkörpers wenigstens ein Formkörper ausgebildet wird. Die Schichten werden einzeln nacheinander in vorbestimmter Schichtdicke durch Ausgeben von Partikelmaterial aus einer Dosiervorrichtung während deren Bewegung über ein Baufeld hinweg aufeinander aufgetragen und in den nach Computerdaten vorbestimmten Bereichen, d.h. in einem vorbestimmten Bereich pro Schicht oder in mehreren vorbestimmten Bereichen pro Schicht, selektiv verfestigt. Durch die selektive Verfestigung der Schicht wird der verfestigte Bereich auch mit dem verfestigten Bereich der nächstunteren Schicht verbunden, so dass in dem Schichtenkörper durch die Verfestigung der vorbestimmten Bereiche ein von Schicht zu Schicht zusammenhängender Formkörper entsteht oder mehrere zusammenhängende Formkörper entstehen.

In dieser Weise können mit Hilfe von generativen Systemen beliebige Objekte nach Computerdaten in einem begrenzten Raum gebaut werden. Beispielsweise wird das Partikelmaterial beim Lasersintern auf eine das Baufeld bestimmende Bauplattform schichtweise ausgetragen und dann mittels selektiv aufgebrachter Laserstrahlung selektiv verfestigt. Die Bauplattform wird anschließend abgesenkt und der Vorgang wird mit dem Auftragen einer neuen Schicht Partikelmaterial und anschließender Verfestigung solange wiederholt, bis das Bauteil innerhalb des Schichtenkörpers in voller Höhe entstanden ist.

Bei anderen Verfahren wird die Verfestigung des Partikelmaterials durch selektives Auftragen eines Bindemittels auf die Schichten aus Partikelmaterial erreicht.

Damit das unverfestigte Partikelmaterial bei beiden der geschilderten Aufbauverfahren an den Rändern des Baufeldes nicht unkontrolliert abfließt, befindet sich die Bauplattform jeweils innerhalb eines Behälters. Die Bauteile können deshalb maximal nur die Größe des Baubehälters aufweisen. Größere Bauteile müssen unter Genauigkeitseinbußen aus mehreren Teilen zusammengefügt werden. Bei der Herstellung von Bauteilen, die wesentlich kleiner als der Behälter sind, muss hingegen dennoch die gesamte Querschnittsfläche des Baubehälters mit Partikelmaterial aufgefüllt werden, damit die Stützwirkung des Partikelmaterials für den unvollendeten Schichtenkörper erhalten bleibt. Dies führt regelmäßig zu einem relativ zu der Bauteilgröße höheren Verbrauch an Verlustmaterial als bei größeren Bauteilen.

Beispielsweise ist es aus EP 0 644 809 B1 bekannt, eine keramische Gießform mit mehreren Gießhohlräumen in einem flachen Behälter aufzubauen, von welchem ein rechteckiges Baufeld umgrenzt wird. Für ein linienförmiges Ausgeben des Partikelmaterials auf den Behälterboden und die daraufliegenden Schichten ist eine langgestreckte Dosiervorrichtung vorgesehen, die zusammen mit einem langgestreckten Druckkopf mit einer Reihe von selektiv gesteuerten Druckdüsen für das Bindemittel auf beidseitig des Behälters verlaufenden Schienen hintereinander über den Behälter hinweg verfahren werden. Hierbei verkleinert sich jedoch bei jedem Ablegen einer neuen Schicht der Abstand zwischen der Dosiervorrichtung und dem Druckkopf einerseits und der Oberseite des in dem Behälter bereits aufgebauten Teils des Schichtenkörpers andererseits um die Schichtdicke der neuen Schicht. Dadurch entstehen unterschiedliche Beschichtungsbedingungen für die einzelnen Schichten des Schichtenkörpers.

Nach einem anderen Ausführungsbeispiel aus der EP 0 644 809 B1 ist daher ein Baubehälter mit einer Bauplattform als Behälterboden vorgesehen, die vor dem Auftragen jeder Schicht um die Schichtdicke abgesenkt wird. Der Behälter ist im allgemeinen in einer Arbeitsöffnung eines Arbeitstisches versenkt angeordnet, so dass die Oberseite der Behälterwand mit dem Arbeitstisch fluchtet. Von dem durch das Absenken zwischen der Oberseite der Behälterwand und der nächstunteren Schicht entstehenden Hohlraum wird die Dicke der jeweiligen Schicht bestimmt. Das Partikelmaterial wird von einer über den Arbeitstisch hinweg verfahrbaren Beschichtungsvorrichtung in den Hohlraum abgegeben und entlang der Oberseite des Arbeitstisches mittels einer Walze und/oder eines Streichbleches geglättet. Überschüssiges Partikelmaterial wird auf dem Arbeitstisch weggeschoben und entsorgt.

Die Bereitstellung eines Baubehälters mit der darin befindlichen, in vertikaler Richtung absenkbaren Bauplattform erfordert jedoch einen hohen technischen Aufwand bei der Abdichtung der Behälterwand gegen die Plattform, um das Partikelmaterial vor dem unkontrollierten Abfließen durch den Spalt zwischen dem Rand der Bauplattform und der Behälterwand zu hindern, ohne dass Gefahr besteht, dass die Plattform wegen des körnigen Partikelmaterials an der Behälterwand verklemmt.

Ein weiterer Nachteil der bisher beschriebenen Ausführungsformen mit absenkbarer Bauplattform liegt in der stetigen Zunahme des zu bewegenden Gewichtes auf der Bauplattform bei voranschreitendem Bauprozess. Insbesondere beim Auftragen der neuen Schicht kann es erforderlich sein, dass das Pulverbett um etwas mehr als die Schichtdicke abgesenkt und dann wieder auf das erforderliche Maß angehoben wird, um die Schichtdicke hinreichend genau einstellen zu können. Bei diesem revolvierenden Betrieb müssen nicht nur das gesamte Gewicht der Pulverschüttung inklusive Bauplattform, sondern auch die Reibungskräfte des Pulverbettes zur Behälterwandung und die Dichtungsreibung zwischen Bauplattform und Behälterwand überwunden werden. Dies führt insbesondere bei großen Baufeldern und hohen Schüttdichten des verwendeten Partikelmaterials zu hohen Belastungen der Führungen und Antriebe.

Nach einem weiteren Ausführungsbeispiel aus der EP 0 644 809 B1 hingegen wird auf eine Behälterwand verzichtet und stattdessen in der Arbeitsöffnung des Arbeitstisches rings des Schichtenkörpers eine künstliche Behälterwand dadurch aufgebaut, dass das von dem Rand der Arbeitsöffnung abgestützte Partikelmaterial einer jeden neu abgelagerten Schicht auch entlang des Umfangsrandes der neu abgelagerten Schicht verfestigt wird. Für massive Bauteile wird vorgeschlagen, nicht das Partikelbett relativ zu dem Arbeitstisch abzuesenken, in dem die Arbeitsöffnung ausgebildet ist, von deren Rand jede neu abgelagerte Schicht umgrenzt wird, sondern statt dessen den Arbeitstisch zusammen mit der Beschichtungsvorrichtung und dem Druckkopf zum Auftragen des Partikelmaterials und des Bindemittels relativ zu dem Partikelbett anzuheben.

Aus WO 2005/097476 A2 ist ein Verfahren gemäß Oberbegriff des Anspruchs 1 bekannt, wobei die örtliche Verfestigung der Schichten aus Partikelmaterial mit Hilfe eines Bindemittels erfolgt, das mittels einer Druckereinheit in flüssigem Zustand aufgedruckt wird. Die langgestreckte Dosiervorrichtung enthält einen Trog, in den das Partikelmaterial zwischen verstellbaren Wänden eingefüllt wird, von denen die Breite des quaderförmig aufgebauten Schichtenverbunds eingestellt wird. Sobald der Trog gefüllt ist, wird die Dosiervorrichtung in Bewegung gesetzt und eine neue Schicht aus Partikelmaterial abgelagert.

Die Ablagerungsrate kann gesteuert reguliert werden. Außerdem wird zusätzliches Bindemittel verwendet, um für jede frische Schicht fortschreitend eine das Bauvolumen des Schichtenverbunds umgebende und dadurch definierende Behälterwand mit äußeren Stützrippen zu drucken.

Durch die Erfindung wird die Aufgabe gelöst, ein Verfahren zum Aufbauen eines Schichtenkörpers aus einer Mehrzahl von übereinander liegenden Schichten aus Partikelmaterial zur Verfügung zu stellen, die zur Ausbildung wenigstens eines Formkörpers in örtlich vorbestimmten Bereichen verfestigt und miteinander verbunden sind. Mit dem Verfahren sollen insbesondere große und schwere Formkörper mit relativ zur Formteilgröße geringem Partikelmaterialverlust bei flexibler Möglichkeit zur Anpassung der Größe des Baufeldes hergestellt werden können.

Auch bei dem Verfahren gemäß der Erfindung, die im Patentanspruch 1 beschrieben ist, werden die Schichten in vorbestimmter Schichtdicke einzeln nacheinander durch Ausgeben des Partikelmaterials aus einer Beschichtungsvorrichtung während deren Bewegung über das Baufeld hinweg aufeinander aufgetragen und in den nach Computerdaten vorbestimmten Bereichen selektiv verfestigt. Anders als im Stand der Technik wird jedoch bei dem Verfahren gemäß der Erfindung der Schichtenkörper auf dem Baufeld freistehend und ohne Verwendung einer äußeren Rand-Begrenzungsvorrichtung zur Einfassung und Abstützung der jeweils aufzutragenden obersten Schicht aufgebaut. Dies bedeutet, dass das Baufeld in seiner Größe in Anpassung an unterschiedliche Größen des herzustellenden Formkörpers oder der herzustellenden Formkörper variabel sein kann, weil das Baufeld in seiner Größe nicht abhängig ist von der Querschnittsgröße eines Behälters oder einer die Baufeldgröße bestimmenden Arbeitsöffnung zur Randabstützung der jeweils obersten Partikelschicht.

Für das Auftragen der obersten Schicht auf die nächstuntere Schicht wird als Beschichtungsvorrichtung eine Dosiervorrichtung verwendet, die vor dem Auftragen der obersten Schicht um deren Schichtdicke angehoben wird und die einen langgestreckten, nach unten offenen Ausgabespalt für das Partikelmaterial aufweist, der sich geradlinig horizontal und senkrecht zu der Bewegungsrichtung der Dosiervorrichtung erstreckt. Die Dosiervorrichtung zur gesteuerten Ausgabe des Partikelmaterials, die auch in Abhängigkeit von der Verfahrgeschwindigkeit der Dosiervorrichtung über das Baufeld hinweg erfolgen kann, ist während der Bewegung der Dosiervorrichtung gesteuert ein- und ausschaltbar.

Wie bei dem oben erwähnten Verfahren gemäß WO 2005/097476 A2 wird auch gemäß der Erfindung nicht die Bauplattform um die Schichtdicke abgesenkt, sondern wird stattdessen die Beschichtungsvorrichtung angehoben. Dadurch ist es nicht erforderlich, eine Bauplattform vorzusehen, die zusammen mit dem mit wachsendem Schichtenkörper zunehmenden Gewicht abgesenkt und in ihrer Höhenlage genau auf die Schichtdicke einjustiert werden muß. Als Beschichtungsvorrichtung wird eine Dosiervorrichtung verwendet, die zur gesteuerten Ausgabe eines vorbestimmten, vorzugsweise konstanten linienförmigen Volumenstroms des Partikelmaterials pro Längeneinheit der Dosiervorrichtung und pro Zeiteinheit gesteuert ein- und ausschaltbar ist. Dadurch kann eine während der Bewegung der Dosiervorrichtung steuerbare Anpassung an unterschiedliche Baufeldgrößen erfolgen.

Die Schichtdicke der neu aufzutragenden obersten Schicht kann bei dem Verfahren gemäß der Erfindung von dem Volumenstrom des Partikelmaterials pro Längeneinheit der Dosiervorrichtung und pro zeiteinheit in Abhängigkeit von der Verfahrgeschwindigkeit der Dosiervorrichtung bestimmt sein. In der Praxis dürfte es jedoch einfacher sein, und wird daher bevorzugt, den Volumenstrom und die Verfahrgeschwindigkeit an eine vorbestimmte Schichtdicke durch Voreinstellung und/oder Steuerung anzupassen.

Andererseits soll die Dosiervorrichtung vor dem Auftragen der jeweils obersten Schicht und nach der Fertigstellung der jeweils nächstunteren Schicht um die Schichtdicke der obersten Schicht, d.h. um denjenigen Betrag angehoben werden, der sich aus der Schichtdicke ergibt, auf welche der ausgegebene Volumenstrom der Dosiervorrichtung pro Längeneinheit der Dosiervorrichtung und pro Zeiteinheit in Abhängigkeit von der Verfahrgeschwindigkeit der Dosiervorrichtung eingestellt ist. Dies kann dadurch erreicht werden, dass der Hebeantrieb für das Anheben der Dosiervorrichtung, der vorzugsweise wenigstens ein Schrittmotor mit wenigstens einer Schraubspindel mit einer Kugelumlaufmutter ist, und der Verfahrantrieb der Dosiervorrichtung in Abhängigkeit voneinander gesteuert werden. In dieser Weise ist es auch möglich, die Schichtdicken des Schichtenkörpers von Schicht zu Schicht zu variieren.

Es ist jedoch auch möglich, den Volumenstrom und/oder die Verfahrgeschwindigkeit der Dosiervorrichtung einstellbar an einen vorbestimmten Hub der Dosiervorrichtung anzupassen, oder - umgekehrt - den Hub der Dosiervorrichtung einstellbar an einen vorbestimmten Volumenstrom und/oder eine vorbestimmte Verfahrgeschwindigkeit anzupassen.

In bevorzugter Ausgestaltung des erfindungsgemäßen Verfahrens wird die Dosiervorrichtung aus einer Position heraus in Bewegung gesetzt, in der sich ihr Ausgabespalt oder -schlitz im Abstand vor dem in Bewegungsrichtung der Dosiervorrichtung vorderen Rand der nächstunteren Schicht befindet, und wird während der Bewegung der Dosiervorrichtung eingeschaltet, wenn sich ihr Ausgabespalt im Bereich über dem vorderen Rand der nächstunteren Schicht befindet. Hierdurch können die Beschleunigungsstrecke der Dosiervorrichtung aus dem Stand heraus bis zu der gewünschten Verfahrgeschwindigkeit wie auch eine Anfangsbeschleunigung des Volumenstroms, der aus der Dosiervorrichtung nach dem Einschalten der Dosiervorrichtung einsetzt, bis zur Erzielung des gewünschten Volumenstroms pro Zeiteinheit so eingestellt werden, dass die Verfahrgeschwindigkeit und der Volumenstrom im Bereich des der Dosiervorrichtung bei deren Start zugewandten vorderen Randes der nächstunteren Schicht die gewünschten Werte haben. Falls dabei eine geringe Menge an Partikelmaterial bereits vor dem Erreichen des vorderen Randes der nächstunteren Schicht ausgegeben wird, kann diese Menge vor dem bereits aufgebauten Teil des Schichtenkörpers nach unten fallen, so dass sich vor diesem Teil des Schichtenkörpers nach und nach eine kleine böschungsartige Schüttung ausbildet.

Entsprechend wird weiter bevorzugt, dass die Dosiervorrichtung über den in Bewegungsrichtung der Dosiervorrichtung hinteren Rand der nächstunteren Schicht hinausbewegt wird und ausgeschaltet wird, wenn sich ihr Ausgabespalt im Bereich über dem hinteren Rand der nächstunteren Schicht befindet. Auch hierbei kann noch ausgegebenes Partikelmaterial hinter dem hinteren Rand des bereits aufgebauten Teils des Schichtenkörpers herunterfallen, so dass sich hinter diesem Teil des Schichtenkörpers nach und nach eine böschungsartige Schüttung bildet.

Vorzugsweise wird jede oberste Schicht während der Bewegung der Dosiervorrichtung hinter deren Ausgabespalt geglättet und/oder verdichtet, wobei die Verdichtungsbewegung bevorzugt mit einer mit der Bewegungsrichtung der Dosiervorrichtung übereinstimmenden Bewegungskomponente durchgeführt wird.

Hierbei wird bevorzugt, den Volumenstrom der Dosiervorrichtung pro Zeiteinheit und/oder die Verfahrgeschwindigkeit der Dosiervorrichtung in Abhängigkeit vom Hub der Dosiervorrichtung so anzupassen, dass sich die vorbestimmte Schichtdicke der jeweils obersten Schicht aus der Nivellierwirkung des Nivellierelements und der Verdichtungswirkung des Nivellierelementes und/oder eines gesonderten Verdichtungselementes ergibt.

Als Partikelmaterial wird bevorzugt ein Sand oder ein Pulver mit einer Korngröße von 20 bis 300 *µ*m, vorzugsweise von 50 bis 200 *µ*m verwendet, wobei die Schichtdicke 100 bis 500 *µ*m je nach verwendeter Korngröße beträgt.

In bevorzugter Ausgestaltung des Verfahrens gemäß der Erfindung wird die aufgetragene oberste Schicht entlang des Randbereichs wenigstens ihres in Bewegungsrichtung der Dosiervorrichtung vorderen Randes, bevorzugt auch entlang des Randbereichs des hinteren Randes, durch Eintragen einer Strahlung oder durch Auftragen eines Bindemittels verfestigt, so dass eine verfestigte Begrenzung des Schichtenkörpers wenigstens entlang dessen in Bewegungsrichtung der Dosiervorrichtung vorderen Seite, bevorzugt auch entlang der hinteren Seite, aus dem Partikelmaterial gebildet wird. Vorzugsweise werden auch die seitlichen Seiten, die parallel zur Bewegungsrichtung der Dosiervorrichtung verlaufen, in dieser Weise verfestigt.

Durch eine derartige Verfestigung wenigstens der Randbereiche des Schichtenkörpers lassen sich insbesondere solche Formkörper aufbauen, die an ihrer Außenseite rechteckig sind und im wesentlichen das gesamte Baufeld einnehmen. Es ist aber auch möglich, durch die Verfestigung der Randbereiche künstliche Wände aus dem Partikelmaterial aufzubauen, von welchen ein Behälter ausgebildet wird, in dessen Innenraum kleinere Formkörper selektiver Größe und Gestalt aufgebaut werden.

Durch die Erfindung ist es auch möglich, den Randbereich der obersten Schicht wenigstens entlang von deren vorderem Rand gegenüber dem verfestigten Randbereich der nächstunteren Schicht zur Vertikalmitte des Schichtenkörpers hin versetzt zu verfestigen wird, so dass die Begrenzungswand in einem Winkel zur Vertikalen verläuft.

In weiterer Ausgestaltung der Erfindung kann die Dosiervorrichtung eingeschaltet werden, wenn sich der Ausgabespalt im Bereich über dem in Bewegungsrichtung der Dosiervorrichtung vorderen Rand der nächstunteren Schicht nahe hinter demselben befindet, und/oder die Dosiervorrichtung kann ausgeschaltet werden, wenn sich ihr Ausgabespalt im Bereich über dem in Bewegungsrichtung der Dosiervorrichtung hinteren Rand der nächstunteren Schicht nahe vor demselben befindet.

Durch eine derartige Ausgestaltung der Erfindung lassen sich Schichtenkörper wie auch Formkörper ausbilden, deren oberer Bereich schräg oder annähernd gewölbt verläuft, ohne dass Partikelmaterial außerhalb der Schräge oder Wölbung verbraucht wird.

In entsprechender Weise ist es durch das Verfahren gemäß der Erfindung auch möglich, ohne zusätzlichen Pulververbrauch gestufte Schichtenkörper wie auch gestufte Formkörper zu gestalten, indem das Baufeld für den oberen Bereich des Schichtenkörpers gegenüber dem Baufeld für den unteren Bereich des Schichtenkörpers verkleinert wird.

Für alle Ausführungsformen der Erfindung wird es daher bevorzugt, für eine Einschaltbarkeit der Dosiervorrichtung zur gesteuerten Ausgabe des Partikelmaterials derart zu sorgen, dass das Einschalten der Dosiervorrichtung während der Bewegung der Dosiervorrichtung erfolgen kann und erfolgt.

Da sich gemäß der Erfindung nicht die Bauplattform zur Dosier- und Verfestigungseinheit bewegt, sondern die beiden letztgenannten zur Bauplattform, die ihrerseits z.B. am Boden ruht, ergibt sich der große Vorteil, dass die zu bewegenden Gewichte über eine beliebige Bauhöhe konstant bleiben.
Dies kann z.B. derart realisiert werden, dass die Dosiereinheit und die Verfestigungseinheit auf einem stabilen Rahmen montiert sind. Der Rahmen seinerseits wird z.B. an den vier Ecken von vier senkrecht am Boden oder an einem bodenseitig gelagerten Gestell befestigten Kugelgewindespindeln in vertikaler Richtung verfahren. Zur Führung der Einheit kann sich an einer oder mehreren Seiten eine oder mehrere Führungseinheiten befinden. Der Rahmen, der vorteilhafterweise, aber nicht darauf beschränkt, geschlossen ist, weist im Zentrum eine Ausnehmung auf, über die sowohl die Dosiereinheit als auch die Verfestigungseinheit einen Zugang zu dem Baufeld haben. Die Bauplattform lagert am Boden und kann z.B. die Form einer Palette haben, die Öffnungen für den Staplertransport oder Ösen für den Krantransport aufweist. In einer anderen Ausführungsform wird gänzlich auf eine Bauplattform verzichtet und die Bauteile werden direkt auf dem Boden der Anlage hergestellt.

Das erfindungsgemäße Gerät kann so konstruiert sein, dass das Gestell mit dem darüber befindlichen Rahmen mobil bewegt werden kann. Dies hat den Vorteil, dass die Anlage nach Vollendung des Bauprozesses zur Seite bewegt werden kann und dadurch den entstandenen Formblock freigibt. Die Bewegung kann z.B. mittels am Gestell montierter Räder erfolgen, die z.B. auf Schienen abrollen. Das Gestell kann dann zwei nebeneinander liegende Bauplätze mit den jeweiligen Bauplattformen wechselseitig bedienen. Während die Anlage auf einem Bauplatz gerade einen Formkörper erstellt, kann auf dem zweiten Bauplatz der letzte Formkörper vom Restsand befreit werden. Damit steigt die Kapazität der Anlage. Während des Bauprozesses würden die Räder am Gestell in der Drehbewegung gesperrt, um ein ungewolltes Verfahren des Gestells zu verhindern. Die Mobilität des Gerätes kann auch dazu genutzt werden, um eine spätere Bewegung des Formkörpers generell unnötig zu machen. So können die Anlage über den späteren Verwendungsplatz des Formkörpers gebracht und der Bauprozess gestartet werden. Dies bietet sich z.B. bei der Verwendung der Anlage für die Herstellung von Großgießformen an, die mehrere Tonnen wiegen können und deshalb vorteilhafterweise am späteren Gießort gefertigt werden.

Als Dosiervorrichtung kann eine solche verwendet werden wie sie in DE 102 16 013 A1 beschrieben ist. Insoweit wird die Offenbarung aus dieser Schrift in die vorliegende Offenbarung mit einbezogen. Bei der dortigen Einrichtung handelt es sich um einen Vibrationsbeschichter, bei dem ein drehbar gelagerter Behälter mit einer schlitzförmigen Öffnung an der Unterseite des vorzugsweise trichterförmigen Ausgabeschachtes zu einer oszillierenden Bewegung angeregt wird. Das Einschalten der Dosiervorrichtung erfolgt dadurch, dass das Partikelmaterial in dem Ausgabeschacht vibriert und dadurch fluidisiert wird, so dass es aus dem Ausgabespalt fließt. Im Stillstand reicht der Schüttkegel des Partikelmaterials innerhalb des Ausgabeschachtes aus, um ein Ausfließen zu verhindern. Die Dosiereinheit wird mit konstanter Geschwindigkeit über das Baufeld hin verfahren und erzeugt damit eine Schicht des Partikelmaterials mit definierter Schichtdicke.

Bei einer Verwendung einer derartigen Dosiervorrichtung ist gemäß der Erfindung wenigstens vorzugsweise vorgesehen, dass das zum Ausgeben des Partikelmaterials führende Einschalten der Dosiervorrichtung von einer Steuervorrichtung, die mit einer Einschaltvorrichtung der Dosiervorrichtung zusammenwirkt, gesteuert während der Bewegung der Dosiervorrichtung, und daher erfolgt, nachdem die Dosiervorrichtung in Bewegung gesetzt wurde.

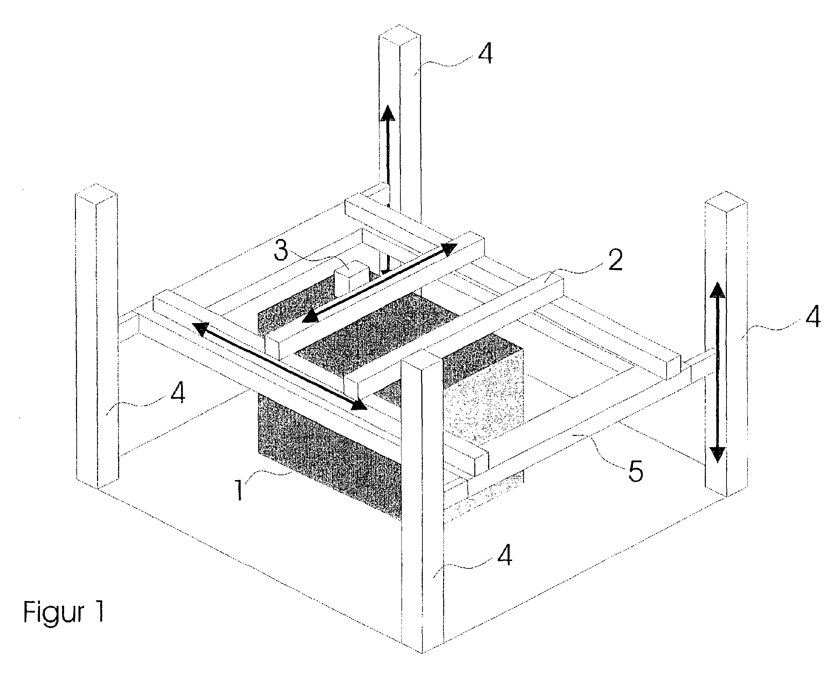

Es können jedoch auch andere Beschichtereinheiten wie z.B. die in der erwähnten EP 0 644 809 B1 zu Fig. 1 beschriebene Beschichtereinheit verwendet werden, falls diese für einen definierten Ausgabe-Volumenstrom gestaltet wird und gezielt gesteuert ein- und ausschaltbar gestaltet wird.

Durch das gezielte Anschalten der Dosiervorrichtung wird erreicht, das tatsächlich nur an den Stellen, an denen der spätere Schichtenkörper entstehen soll, Material aufgetragen wird. Dadurch werden sowohl Partikelmaterial als auch Bauzeit eingespart, weil nicht das gesamte, sondern nur das genutzte Baufeld überstrichen werden muss. In der Querrichtung der Beschichterachse kann das Baufeld z.B. durch sogenannte Schutter begrenzt werden. Dazu können sich in dem Beschichter gemäß oben beschriebener Ausführungsform schaltbare Einheiten befinden, die den Ausgabespalt der Länge nach gezielt verkürzen. Damit seinerseits wird eine Einschränkung in der Breite der zu beschichtenden Fläche erzielt. Diese schaltbaren Einheiten können z.B. in Form einfahrbarer Schieber realisiert werden.

Einfache Formgeometrien wie z.B. rechteckige Formblöcke können so wie sie sind gebaut werden, da die Begrenzungsseiten senkrechte Wände aufweisen. In der Anlage können auch mehrere derartige Formblöcke gleichzeitig hergestellt werden, indem die Teile innerhalb des zur Verfügung stehenden Baufeldes neben- , hinter und übereinander platziert werden. Komplexere Geometrien mit Hinterschnitten können in einen rechteckigen Kasten mit senkrechten oder leicht nach innen geneigten Wänden definierter Wandstärke aufgebaut werden. Der Kasten weist dabei mindestens die Höhe der innenliegenden zu bauenden Formkörper auf. Dieser Kasten wird im Bauprozess aus verfestigtem Partikelmaterial zusammen mit der darin befindlichen gewünschten Geometrie hergestellt. Der Kasten kann bei Bedarf einen Boden aufweisen. Dies ist z.B. erforderlich, wenn der gesamte Kasten mit Inhalt nach Vollendung entfernt und an einen anderen Ort verbracht werden soll. Nach Vollendung des Bauprozesses wird der Kasten weggebrochen oder abgehoben, um an das eigentliche Bauteil (den Formkörper) oder die eigentlichen Bauteile zu gelangen.

Auch hier besteht wieder die Möglichkeit, einen oder mehrere Kästen neben, hinter oder übereinander anzuordnen. Bevorzugt bei der Gestaltung der Kästen ist es, dass die seitlichen Begrenzungen in der Draufsicht ein weitgehend geschlossenes Rechteck bilden. Von der Beschichtereinheit wird zumindest innerhalb dieses Rechtecks bei der Beschichtungsfahrt aktiv Partikelmaterial aufgetragen. Vorteilhafterweise ist der aktive Bereich des Beschichters um einen kleinen Betrag größer als die Breite des zu bauende Rechtecks. Auch sollte der Startpunkt der Beschichterfahrt etwas vor der eigentlichen Geometrie liegen, um sicher zu stellen, dass sich der Beschichter im stationären Zustand befindet, wenn er die eigentliche Geometrie erreicht. Das am Rand zuviel abgegebene Partikelmatreial fällt zu Boden und bildet eine nicht weiter schädliche Schüttung rund um das zu bauende Objekt.

Nach Vollendung des Bauprozesses wird das nicht gebundene Partikelmaterial z.B. durch Absaugen oder Abblasen entfernt. Dies kann innerhalb der Anlage erfolgen oder die Formteile werden auf der Bauplattform liegend an eine andere Stelle verbracht, wo sie gereinigt und ggf. nachbehandelt werden.

Die Beschichtereinheit (die Dosiervorrichtung) kann im Prozess auf einer Traverse verfahren, die auf parallelen Führungseinheiten lagert, die ihrerseits auf dem in vertikaler Richtung verstellbaren Rahmen befestigt sind. Der Antrieb kann z.B. über einen Zahnriemenantrieb erfolgen, wobei in diesem Fall vorteilhafterweise beide Führungsseiten angetrieben werden, um ein Verklemmen zu verhindern. Die beiden Antriebsseiten können über eine Kardanwelle gekoppelt und über einen einzigen Motor betrieben werden.

Die Beschichtereinheit kann mittels einer Zuführung mit Partikelmaterial versorgt werden. Dies kann z.B. mittels eines auf dem Beschichter mitfahrenden Pneumatik-Förderers erfolgen. Dieser saugt bei Bedarf Partikelmaterial aus einem neben der Anlage stehenden Behälter durch einen flexiblen Schlauch. Das Partikelmaterial verteilt sich im Beschichter über die Längsachse entweder über die Ausbildung eines Schüttkegels oder eine Verteileinheit, z.B. eine angetriebene Schnecke.

Die Verfestigungseinheit kann z.B. ein über sogenannte Galvanometer-Spiegel gezielt über das Baufeld abgelenkter und in einer Optik fokussierter Laserstahl sein,. In einer anderen Ausführungsform ist auch die Verwendung eines über Glasfaser geführten Laserstrahls möglich. Die Glasfaser mit angeschlossener Fokussieroptik kann mittels einer eigenen X-Y-Führungseinheit über das Baufeld geführt werden und so selektiv die Verfestigung des Partikelmaterials herbeiführen. Anstelle des einen Laser-Strahls oder der einen Glasfaser könnte eine Mehrzahl solcher Systeme verwendet werden, um große Baufelder abzudecken. In einer anderen Ausführungsform werden ein oder mehrere Diodenlaser mit entsprechender Fokussieroptik über das Baufeld geführt.

In der bevorzugten Ausführungsform wird ein Schreibkopf über das Baufeld geführt, der aus einer Vielzahl von Düsen gezielt einzelne Tropfen eines Binder-Mittels auf die jeweils oberste Schicht aufträgt, die zu einer Verfestigung des Partikelmaterials führen. Der Schreibkopf kann sich dabei mäanderförmig über das Baufeld hin bewegen.

Die Führung des Schreibkopfes kann über eine X-Y-Mechanik aus angetriebenen Achsen erfolgen. Vorteilhafterweise erfolgt die Längsbewegung des Schreibkopfes über einen Zahnriemenantrieb, wohingegen der kurze Versatzweg vor der Aufnahme der neuen in entgegengesetzter Richtung verlaufenden Längsbewegung aufgrund der erhöhten Anforderung an die Positioniergenauigkeit über einen Spindelantrieb erfolgt.

Es sind jedoch auch eine andere-Verfahrmechanismen wie z.B. Linearantriebe oder andere Einrichtungen zur Bewegung des Schreibkopfes wie z.B. Heaxapoden möglich.

Der Druckweg des Schreibkopfes kann entsprechend der tatsächlich zu druckenden Geometrie optimiert werden. Die Geschwindigkeit der Längsbewegung während des Schreibvorganges ergibt sich aus der zulässigen Frequenz der einzelnen Dosiervorgänge der Düsen und der gewünschten Auflösung des abgelegten Bindertröpfchen auf der Partikelschicht. Diese Geschwindigkeit kann durch eine erhöhte Positioniergeschwindigkeit ergänzt werden, die von der Steuerung gewählt wird, wenn der Schreibkopf zum Startpunkt des nächsten Schreiblaufes bewegt wird. Diese Strecke kann der Schreibkopf, dann auf kürzeste Distanz überwinden.

### Zeichnungen:

Figur 1 zeigt eine Ausführungsform einer für das erfindungsgemäße Verfahren geeigneten Vorrichtung in der Schrägansicht. Die Z-Achse besteht aus vier vertikalen Säulen 4, die einen Rahmen 5 tragen, auf dem die Dosiervorrichtung 2 und ein Druckkopf 3 auf den jeweiligen Bewegungsachsen montiert sind.' In der Mitte ist ein Schichtenkörper 1, z.B. ein Formkörper zu sehen, der gerade aufgebaut wird. Der Rahmen 5 wird mit dem Wachsen des Schichtenkörpers 1 in vertikaler Richtung schrittweise verstellt.

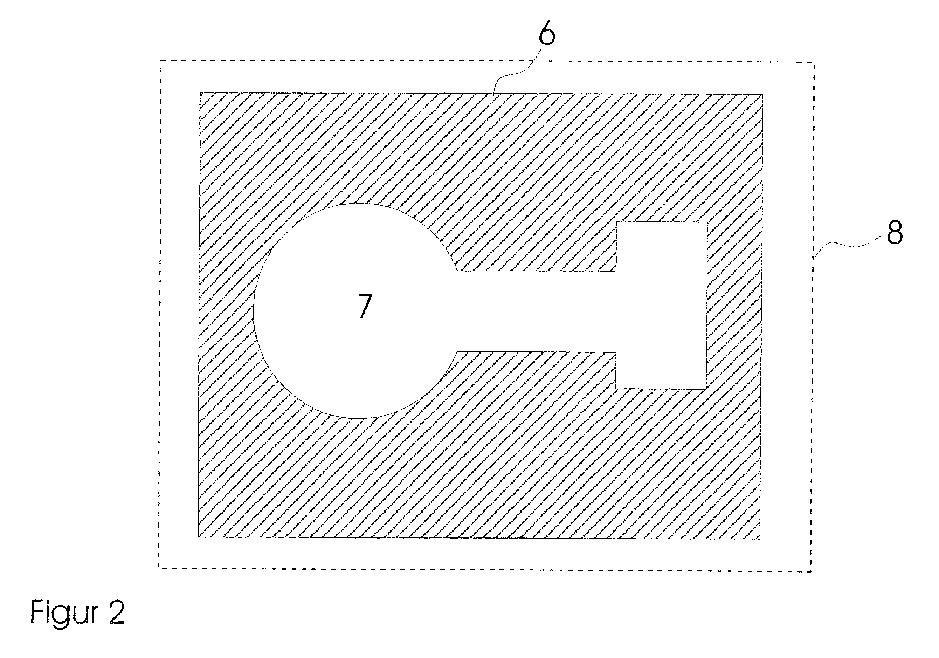

Figur 2 zeigt einen aus dem Schichtenkörper durch selektive Verfestigung gebildeten Formkörper 6 in der Draufsicht (ohne Anlage) im Baufeld 8. Deutlich erkennbar ist, dass aufgrund der eigenen Begrenzung des Formkörpers 6 keine zusätzliche Baubox erforderlich ist. Die Innenkontur ist während der Aufbauphase mit dem ungebundenen Partikelmaterial 7 gefüllt. Dieses kann nach Prozessende z.B. abgesaugt werden.

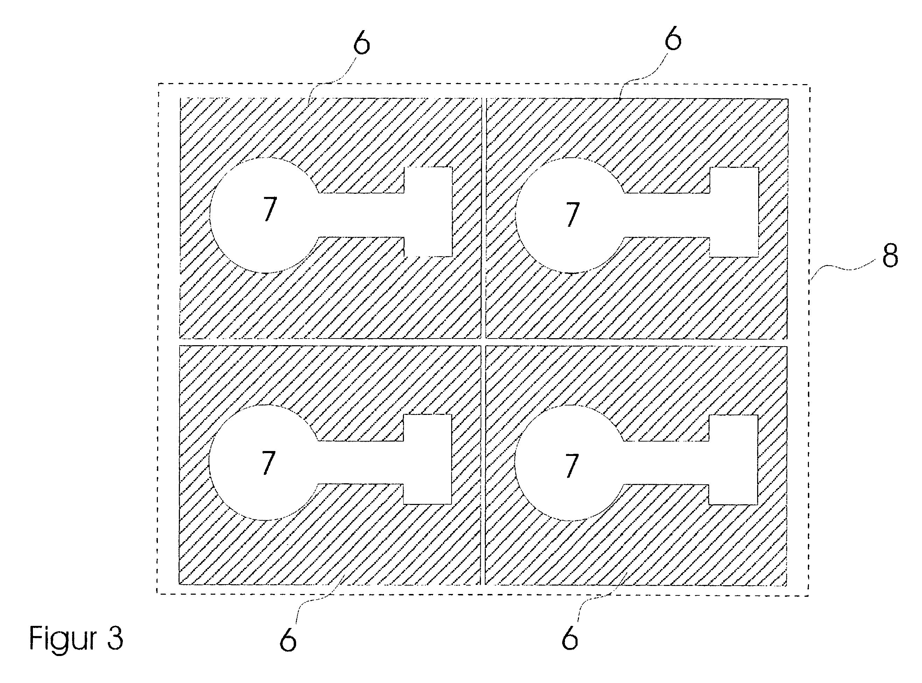

Figur 3 zeigt eine Anzahl von vier Formkörpern 6, die gleichzeitig in der Anlage gebaut werden.

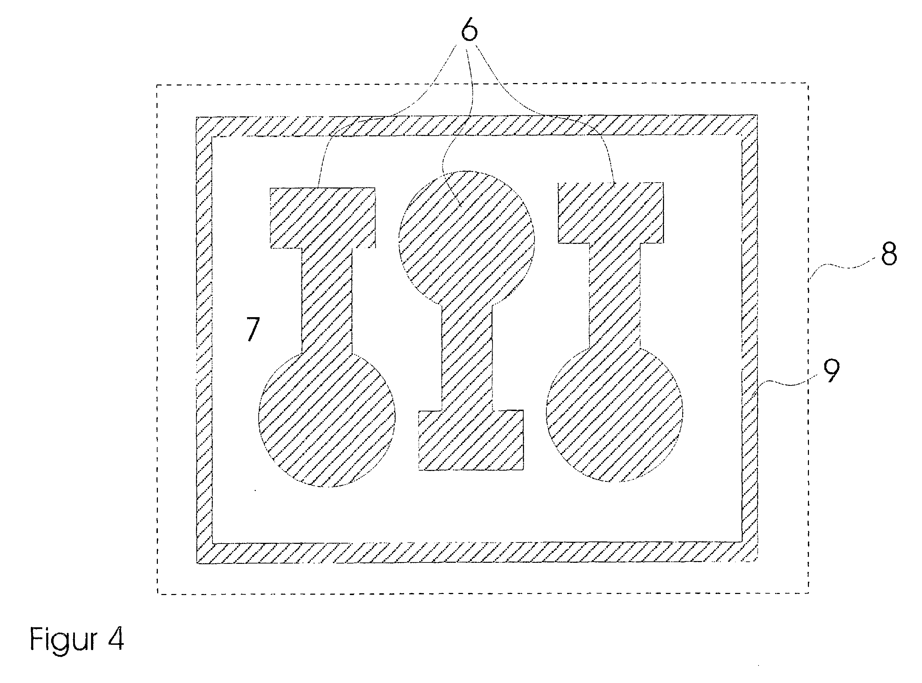

Figur 4 zeigt den Aufbau von Formkörpern 6, die keine kubischen Außenkonturen aufweisen. Hierbei kann es sich z.B. um Kerne handeln. Diese werden in einem Begrenzungskasten 9 platziert, der mitgebaut wird. Nach Prozessende wird der Kasten entfernt und wird das lose Partikelmaterial 7 abgesaugt.

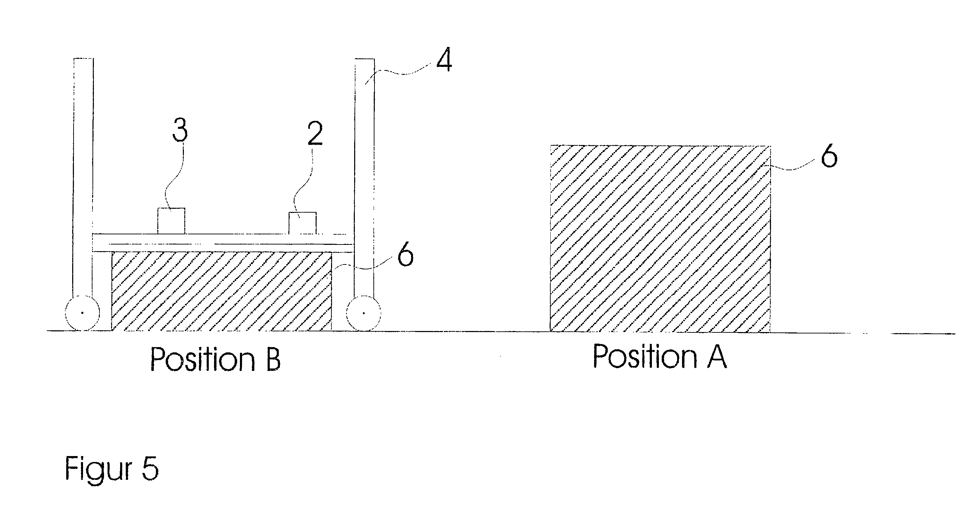

Figur 5 zeigt eine Ausführungsform einer erfindungsgemäß verwendbaren Anlage, die auf Rollen von einer Position A in die Position B gefahren werden kann. In Position A steht bereits ein vollendeter Formkörper 6, der nun z.B. vom Rest-Partikelmaterial gesäubert wird. In Position B wird gerade ein neuer Formkörper 6 aufgebaut.

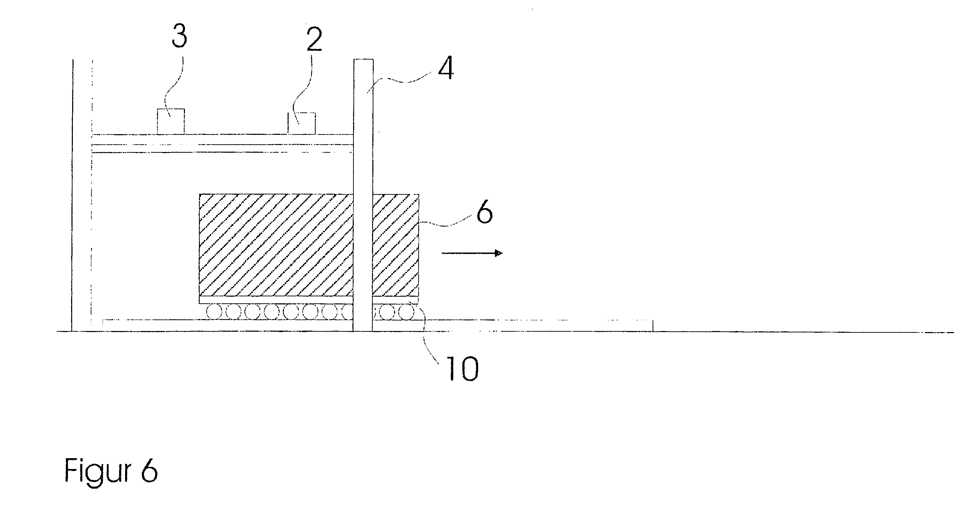

Figur 6 zeigt eine Ausführungsform einer erfindungsgemäß verwendbaren Anlage, bei der eine Bauplattform 10 auf Rollen gelagert ist auf welcher der Formkörper 6 nach Prozeßende aus der Anlage heraus in eine Entpackposition gefahren werden kann.

## Patentansprüche

1. Verfahren zum Aufbauen eines Schichtenköpers (1, 6) aus einer Mehrzahl von auf einem Baufeld übereinander liegenden Schichten aus Partikelmaterial (7), die in örtlich vorbestimmten Bereichen verfestigt und miteinander verbunden sind, so dass von den verfestigten Bereichen der Schichten wenigstens ein Formkörper (1, 6) ausgebildet wird, wobei die Schichten in vorbestimmter Schichtdicke einzeln nacheinander durch Ausgeben des Partikelmaterials (7) aus einer Beschichtungsvorrichtung während deren Bewegung über das Baufeld (8) hinweg aufeinander aufgetragen werden und in den nach Computerdaten vorbestimmten Bereichen selektiv verfestigt werden, und als Beschichtungsvorrichtung eine Dosiervorrichtung (2) verwendet wird, die einen langgestreckten, nach unten offenen Ausgabespalt für das Partikelmaterial aufweist, der sich geradlinig horizontal und senkrecht zu der Bewegungsrichtung der Dosiervorrichtung (2) erstreckt, und die zur gesteuerten Ausgabe des Partikelmaterials (7) während ihrer Bewegung gesteuert ein- und ausschaltbar ist, wobei der Schichtenverbund auf dem Baufeld (8) freistehend und ohne Verwendung einer äußeren Rand-Begrenzungsvorrichtung für die jeweils aufzutragende oberste Schicht dadurch aufgebaut wird, dass die Dosiervorrichtung (2) auf einem Rahmen (5) verfahren wird, der schrittweise vertikal verstellbar ist und vor dem Auftragen der jeweils obersten Schicht um deren Schichtdicke vertikal nach oben verstellt wird, **dadurch gekennzeichnet, dass** das Einschalten der Dosiervorrichtung (2) für das Auftragen der jeweiligen obersten Schicht während der Bewegung der Dosiervorrichtung (2) erfolgt, nachdem die Dosiervorrichtung (2) in Bewegung gesetzt wurde.

2. Verfahren nach Anspruch 1, wobei die Dosiervorrichtung (2) aus einer Position heraus in Bewegung gesetzt wird, in der sich ihr Ausgabespalt in Bewegungsrichtung der Dosiervorrichtung vor dem vorderen Rand der nächstunteren Schicht im Abstand befindet, und eingeschaltet wird, wenn sich ihr Ausgabespalt im Bereich über dem vorderen Rand der nächstunteren Schicht befindet.

3. Verfahren nach Anspruch 2, wobei die Dosiervorrichtung (2) über den in Bewegungsrichtung hinteren Rand der nächstunteren Schicht hinausbewegt wird und ausgeschaltet wird, wenn sich ihr Ausgabespalt im Bereich über dem hinteren Rand der nächstunteren Schicht befindet.

4. Verfahren nach einem der Ansprüche 1 bis 3, bei welchem die oberste Schicht während der Bewegung der Dosiervorrichtung (2) in Bewegungsrichtung hinter dem Ausgabespalt geglättet und/oder verdichtet wird.

5. Verfahren nach Anspruch 4, bei welchem die Verdichtung in einer Verdichtungsbewegung mit einer mit der Bewegungsrichtung der Dosiervorrichtung übereinstimmenden Bewegungskomponente durchgeführt wird.

6. Verfahren nach einem der Ansprüche 1 bis 5, wobei eine Dosiervorrichtung (2) verwendet wird, die einen das aufzutragende Partikelmaterial (7) enthaltenden trichterförmigen Ausgabeschacht aufweist, der an seinem unterem Ende in den Ausgabespalt mündet, und die dadurch einschaltbar ist, dass das Partikelmaterial in dem Ausgabeschacht vibriert und dadurch fluidisiert wird.

7. Verfahren nach einem der Ansprüche 1 bis 6, bei welchem die Schichten in einer Schichtdicke von 100 bis 500 µm bei einer Korngröße der Materialpartikel von 20 bis 300 µ, vorzugsweise von 50 bis 200 µ, aufgetragen werden.

8. Verfahren nach einem der Ansprüche 1 bis 7, bei welchem die aufgetragene oberste Schicht entlang des Randbereichs wenigstens ihres in Bewegungsrichtung der Dosiervorrichtung (2) vorderen Randes durch Eintragen einer Strahlung oder durch Auftragen eines Bindemittels verfestigt wird, so dass eine verfestigte Begrenzung des Schichtenkörpers wenigstens entlang dessen in Bewegungsrichtung der Dosiervorrichtung vorderen Seite aus dem Partikelmaterial gebildet wird.

9. Verfahren nach Anspruch 8, wobei der Randbereich der obersten Schicht wenigstens entlang von deren vorderem Rand gegenüber dem verfestigten Randbereich der nächstunteren Schicht zur Vertikalmitte des Schichtenkörpers hin versetzt verfestigt wird, so dass die Begrenzungswand in einem Winkel zur Vertikalen verläuft.

10. Verfahren nach einem der Ansprüche 2 bis 9, bei welchem die Dosiervorrichtung (2) eingeschaltet wird, wenn sich der Ausgabespalt im Bereich über dem in Bewegungsrichtung der Dosiervorrichtung vorderen Rand der nächstunteren Schicht nahe hinter demselben befindet.

11. Verfahren nach einem der Ansprüche 3 bis 10, bei welchem die Dosiervorrichtung (2) ausgeschaltet wird, wenn sich ihr Ausgabespalt im Bereich über dem in Bewegungsrichtung der Dosiervorrichtung hinteren Rand der nächstunteren Schicht nahe vor demselben befindet.

12. Verfahren nach einem der Ansprüche 1, 4 bis 9, wobei die Dosiervorrichtung (2) während ihrer Bewegung eingeschaltet wird, wenn sich ihr Ausgabespalt in Bewegungsrichtung im Abstand hinter dem vorderen Rand der nächstunteren Schicht befindet.

13. Verfahren nach einem der Ansprüche 1 bis 12, bei welchem der Hebeantrieb für das Anheben der Dosiervorrichtung (2) und der Verfahrantrieb der Dosiervorrichtung in Abhängigkeit voneinander gesteuert werden.

## Claims

1. Method for constructing a laminated body (1, 6) from a number of layers of particle material (7) lying on top of each other on a working field, which are hardened and joined to each other in locally predetermined areas, so that at least one molded body (1, 6) is formed from the hardened areas of the layers, wherein the layers are applied individually one after another in a predetermined layer thickness by dispensing the particle material (7) from a coating device during its movement across the working field (8) and are selectively hardened in the areas predetermined according to computer data, and wherein a dosing device (2) is used as the coating device, which has an elongated dispensing opening for the particle material that is open at the bottom and extends linearly and horizontally, and vertically to the direction of movement of the dosing device (2), and which can be switched on and off in a controlled manner for the controlled dispensing of the particle material (7), wherein the laminated compound is formed on the working field (8) in a freestanding manner and without the use of an outer edge limiting device for the respective top layer to be applied by moving the dosing device (2) on a frame (5) which can gradually be adjusted vertically and is adjusted vertically upwards by the layer thickness thereof before applying each respective top layer, **characterized in that** switching on the dosing device (2) for applying the respective top layer takes place during the movement of the dosing device (2) after the dosing device (2) having been set in motion.

2. Method according to claim 1, wherein the dosing device (2) is set in motion from a position where its dispensing opening is at a distance in front of the front edge of the next lower layer in the direction of movement of the dosing device, and is switched on when its dispensing opening is located in the area above the front edge of the next lower layer.

3. Method according to claim 2, wherein the dosing device (2) is moved beyond the rear edge of the next lower layer in the direction of the movement, and switched off when its dispensing opening is located in the area above the rear edge of the next lower layer.

4. Method according to any of the claims 1 to 3, wherein the top layer is smoothed and/or compressed in a direction of movement behind the dispensing opening during the movement of the dosing device (2).

5. Method according to claim 4, wherein the compression is performed in a compression movement by a movement component corresponding to the direction of movement of the dosing device.

6. Method according to any of claims 1 to 5, wherein a dosing device (2) is used, which comprises a funnel-shaped dispensing duct containing the particle material (7) to be applied which ends at its bottom end into the dispensing opening, and which can be switched on by the particle material vibrating in the dispensing duct and thereby becoming fluid.

7. Method according to any of claims 1 to 6, wherein the layers are applied in a layer thickness of 100 to 500 µm at a granular size of the material particles of 20 to 300 µ, preferably of 50 to 200 µ.

8. Method according to any of claims 1 to 7, wherein the applied top layer is hardened along the edge area of at least its front edge in the direction of movement of the dosing device (2) by administering a radiation or by the application of a binding agent, so that a hardened limitation of the laminated body is formed from the particle material at least along the front side thereof in the direction of movement of the dosing device.

9. Method according to claim 8, wherein the edge area of the top layer is hardened at least along the front edge thereof opposite the hardened edge area of the next lower layer, offset to the vertical centre of the laminated body, so that the limiting wall extends at an angle to the vertical.

10. Method according to any of claims 2 to 9, wherein the dosing device (2) is switched on when the dispensing opening is located in the area above the front edge of the next lower layer closely behind the same in the direction of movement of the dosing device.

11. Method according to any of claims 3 to 10, wherein the dosing device (2) is switched off when its dispensing opening is located in the area above the rear edge of the next lower layer closely in front of the same in the direction of movement of the dosing device.

12. Method according to any of claims 1, 4 to 9, wherein the dosing device (2) is switched on during its movement, when its dispensing opening is located at a distance behind the front edge of the next lower layer in the direction of movement.

13. Method according to any of claims 1 to 12, wherein the lifting drive for lifting the dosing device (2) and the moving drive of the dosing device are controlled interdependently.

## Revendications

1. Procédé de réalisation d'un corps (1, 6) formé par une pluralité de couches, qui sont formées par un matériau particulaire (7) et disposées les unes au-dessus des autres sur une zone de réalisation et qui sont compactées et reliées entre elles dans des zones localement prédéfinies, de telle sorte qu'au moins un corps (1, 6) est réalisé par les zones compactées des couches, lesdites couches étant déposées les unes sur les autres avec une épaisseur de couche prédéfinie, séparément les unes à la suite des autres par la distribution du matériau particulaire (7) à partir d'un dispositif de revêtement pendant le déplacement de celui-ci au-dessus de la zone de réalisation (8) et étant compactées de manière sélective dans des zones prédéfinies selon des données d'un ordinateur, et le dispositif de revêtement utilisé étant un dispositif de dosage (2), lequel comporte une fente de distribution allongée, qui est ouverte vers le bas pour la distribution du matériau particulaire et qui s'étend en ligne droite horizontalement et perpendiculairement au sens de déplacement du dispositif de dosage (2), et lequel peut être branché et débranché de manière commandée pendant son déplacement pour une distribution commandée du matériau particulaire (7), la structure en couches, librement posée sur la zone de réalisation (8), étant réalisée sans l'utilisation d'un dispositif extérieur de limitation des bords pour la couche respectivement supérieure à déposer, par le fait que le dispositif de dosage (2) est déplacé sur un châssis (5), qui peut être réglé progressivement dans le sens vertical et qui, avant la pose de la couche respectivement supérieure, est déplacé verticalement vers le haut sur une distance correspondant à l'épaisseur de ladite couche, **caractérisé en ce que** la mise en marche du dispositif de dosage (2) pour le dépôt de la couche respectivement supérieure est effectuée pendant le déplacement du dispositif de dosage (2), après que le dispositif de dosage (2) a été mis en mouvement.

2. Procédé selon la revendication 1, **caractérisé en ce que** le dispositif de dosage (2) est mis en mouvement à partir d'une position dans laquelle sa fente de distribution se situe, par référence au sens de déplacement du dispositif de dosage, à distance devant le bord avant de la couche inférieure la plus proche, et est branché lorsque sa fente de distribution se situe dans la zone au-dessus du bord avant de la couche inférieure la plus proche.

3. Procédé selon la revendication 2, **caractérisé en ce que** le dispositif de dosage (2) est déplacé au-delà du bord arrière, par référence au sens de déplacement, de la couche inférieure la plus proche, et est débranché lorsque sa fente de distribution se situe dans la zone au-dessus du bord arrière de la couche inférieure la plus proche.

4. Procédé selon l'une quelconque des revendications 1 à 3, **caractérisé en ce que** la couche supérieure est lissée et/ou compactée en aval de la fente de distribution, par référence au sens de déplacement, pendant le déplacement du dispositif de dosage (2).

5. Procédé selon la revendication 4, **caractérisé en ce que** le compactage est effectué selon un mouvement de compactage avec une composante de mouvement coïncidant avec le sens de déplacement du dispositif de dosage.

6. Procédé selon l'une quelconque des revendications 1 à 5, **caractérisé en ce que** l'on utilise un dispositif de dosage (2), lequel comporte une cheminée de distribution en forme de trémie, qui contient le matériau particulaire (7) à distribuer et débouche au niveau de son extrémité inférieure dans la fente de distribution, et lequel peut être mis en marche par le fait que le matériau particulaire vibre dans la cheminée de distribution et est fluidisé de ce fait.

7. Procédé selon l'une quelconque des revendications 1 à 6, **caractérisé en ce que** les couches sont déposées avec une épaisseur de couche de 100 à 500 µm avec une granulométrie du matériau particulaire de 20 à 300 µ, de préférence de 50 à 200 µ.

8. Procédé selon l'une quelconque des revendications 1 à 7, **caractérisé en ce que** la couche supérieure déposée est compactée le long de la zone de bordure de son bord avant au moins, par référence au sens de déplacement du dispositif de dosage (2), par l'introduction d'un rayonnement ou par le dépôt d'un liant, de telle sorte qu'il se forme à partir du matériau particulaire une délimitation compactée du corps au moins le long du côté avant de celui-ci, par référence au sens de déplacement du dispositif de dosage.

9. Procédé selon la revendication 8, **caractérisé en ce que** la zone de bordure de la couche supérieure est compactée au moins le long de son bord avant par rapport à la zone de bordure compactée de la couche inférieure la plus proche, en étant décalée vers le centre vertical du corps en couches, de telle sorte que la paroi de délimitation forme un angle avec la verticale.

10. Procédé selon l'une quelconque des revendications 2 à 9, **caractérisé en ce que** le dispositif de dosage (2) est mis en marche lorsque la fente de distribution se situe, par référence au sens de déplacement du dispositif de dosage, dans la zone au-dessus du bord avant de la couche inférieure la plus proche, à très courte distance derrière celui-ci.

11. Procédé selon l'une quelconque des revendications 3 à 10, **caractérisé en ce que** le dispositif de dosage (2) est débranché lorsque sa fente de distribution se situe, par référence au sens de déplacement du dispositif de dosage, au-dessus du bord arrière de la couche inférieure la plus proche, à très courte distance devant celui-ci.

12. Procédé selon l'une quelconque des revendications 1, 4 à 9, **caractérisé en ce que** le dispositif de dosage (2) est mis en marche pendant son déplacement lorsque sa fente de distribution se situe, par référence au sens de déplacement, à distance derrière le bord avant de la couche inférieure la plus proche.

13. Procédé selon l'une quelconque des revendications 1 à 12, **caractérisé en ce que** le système d'entraînement pour le levage du dispositif de dosage (2) et le système d'entraînement pour le déplacement du dispositif de dosage sont commandés l'un en fonction de l'autre.
